# EUROPEAN PATENT APPLICATION

(11) **EP 3 816 825 A1**
(43) Date of publication of application: **05.05.2021**
(21) Application number: 19824636.5
(22) Date of filing: 03.06.2019
(51) Int. Cl.: G06F 17/40, G06F 16/93

(54) **AUTOMATED SYSTEM FOR PREPARING DOCUMENTS**

(30) Priority: 27.06.2018 RU 2018123329
(71) Applicant: Genkin, Artem Semenovich, Moscow, 109117 (RU)
(72) Inventor: Genkin, Artem Semenovich, Moscow, 109117 (RU)
(74) Representative: Jeck, Anton
(86) International application number: PCT/RU2019/000398
(87) International publication number: WO 2020/005106

(57) **Abstract**

An automated system for preparing documents consists of an external user's computer device, a node for communication with the external user, a visual display unit, an interactive "personal account" service, a search system, an internal databank of document templates, an operator's computer device, a unit for preparing documents, a databank of prepared documents, a logging system and a unit for downloading prepared documents, a database unit of external sources, a communications node and a unit for checking and adjusting document templates, wherein the search system is connected to electronic databases of external sources of information, wherein the unit for checking and adjusting document templates exports document templates from various sources, compares the document templates and adjusts a template layout to an active version of the document.

## Description

The invention belongs to the field of automation in the field of services and can be used in the provision of reference, information and consulting services in various fields of activity. In particular, the system, which provides automated preparation of contracts and applications, and other documents (both standard and individual ones), is considered.

From the prior art, the solutions are known that automatically provide the consumer with legal services, depending on the thematic focus of the issue to be addressed.

As the closest technical solution (prototype) of the system, which prepares documents in an automated mode, the system of service provision in the field of creation of documents can be specified (RU No. 118454, G06F 17/21, published 20.07.2012). The specified system includes a set of computer devices, configured to enter the remote access network and acting as work stations for processing documents, at least one computer device configured to store databases of documents in the form of templates, at least one computer device, which is a server communicating with a computer device designed to store databases of documents in the form of templates, and configured to implement a portal designed to provide and control user access when accessing the site on this server remotely, containing software for user access to templates and filling templates by entering personal data, at least one computer device designed to store databases of prepared and completed documents.

The disadvantage of the known system is the lack of connections to external sources of information, as well as updating the internal base, which significantly reduces the system capabilities and the quality of information support for the automatic preparation of documents.

The purpose of this invention is to eliminate the above disadvantages and to create an automated system for preparing documents, providing prompt and objective information support for the creation of documents in accordance with the requirements of current legislation, good business practices, industry norms and rules.

The technical result of this invention consists in expanding the functionality of the system for collecting and processing information through the possibility of interfacing the system with electronic libraries and databases of external sources of information, providing timely and quality information support for preparing documents of various thematic orientation, as well as updating the information of the system's internal database.

The problem of the invention is solved, and the specified technical result is achieved by the automated system for preparing documents, characterized in that it consists of at least one external user's computer device, external user's communications node, visual display unit, "personal account", search system, internal databank of document templates, computer device of the operator of the document template databank, unit for preparing documents, databank of prepared documents, logging system, unit for downloading prepared documents, external sources database unit, communications node, unit for checking and adjusting document templates. The communications node is connected to the database of external sources and the search system by direct and feedback communication. The search system is configured to interface with electronic databases of external sources of information. The unit for checking and adjusting document templates is configured to export document templates from various sources, including external sources, compare document templates and adjust the template layout from the internal databank of document templates to the current version of the document. The output of the search system is connected to the input of the unit for checking and adjusting document templates, one output of which is switched with the computer device of the operator of the internal databank of document templates by means of direct and feedback communication, and the second output is switched with the unit for preparing documents, connected with the databank of prepared documents, the output of which is connected with the input of the unit for downloading prepared documents by means of direct and feedback communication through the logging system connected with the interactive service "personal account", and its output is switched to the external user's computer device through the communications node.

Thanks to the "personal account" in the automated system, only registered users can be given access to work with the automated system for preparing documents, view the history of previously created documents and send prepared documents to the email specified during user registration; in addition, it allows to ensure the confidentiality of personal and financial information.

The unit for checking and adjusting document templates allows to compare document templates from the internal databank of document templates and the database of external sources, and to correct document template layouts to the current version of the document, so that all templates of the internal databank of document templates always remain up-to-date to provide them to the user.

The connection of the communications node with the database of external sources and the search system by direct and feedback communication provides, in the case of direct communication, the transfer of the user's document search request to the database of external sources to find the required document, and in the case of feedback communication the database of external sources provides the transfer of the required document to the search system.

The search system configured to interface with electronic databases of external sources of information allows to expand the capabilities of automated system for preparing documents in order to quickly find the necessary template that the search system could not find in the internal databank of document templates, not to spend time on searching for the necessary site with this document, and use the prepared list of official resources, such as Federal Tax Service, Federal Bailiff Service, etc, using this system, which provides prompt and objective information support, as well as to update documents whose version is already outdated in the internal databank of document templates, with the help of the unit for checking and adjusting document templates.

The unit for checking and adjusting document templates configured to export document templates from various sources, including external sources, compare document templates and adjust the template layout from the internal databank of document templates to the current version of the document, allows the user of the automated system for preparing documents to find the given document and not to doubt on its relevance.

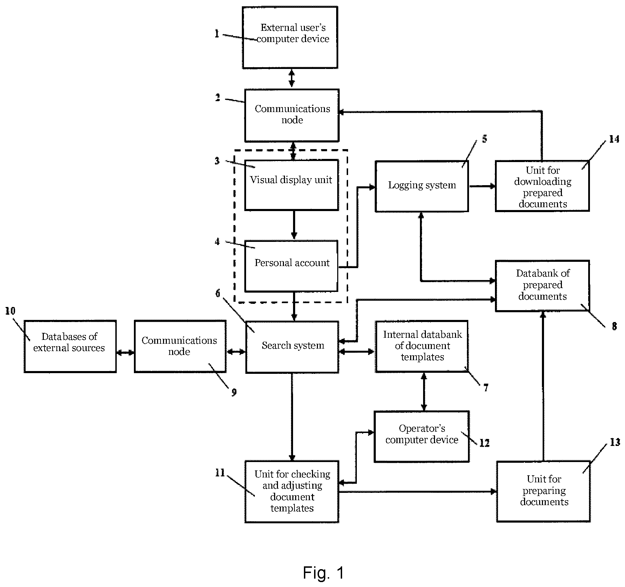

The summary of the invention is explained by the drawing (Fig.), which shows a structural diagram of the automated system for preparing documents, where:
1 - external user's computer device;
2 - communications node;
3 - visual display unit;
4 - personal account;
5 - logging system;
6 - search system;
7 - internal databank of document templates;
8 - databank of prepared documents;
9 - communications node;
10 - databases of external sources;
11 - unit for checking and adjusting document templates;
12 - operator's computer device;
13 - unit for preparing documents;
14 - unit for downloading prepared documents.

The automated system for preparing documents contains the external user's computer device 1. The external user's computer device 1 is connected through the communications node 2 to the visual display unit 3 and the integral interactive service "personal account" 4. The "personal account" 4 is connected to the search system 6, which has direct and backward communication with the internal databank 7 of document templates, databank 8 of prepared documents, as well as databases 10 of external sources through the communications node 9. Herewith the output of the search system 6 is connected to the input of the unit 11 for checking and adjusting document templates, one output of which is switched with the computer device 12 of the operator of the internal databank 7 of document templates by means of direct and feedback communication, and the second output is switched with the unit 13 for preparing documents, connected with the databank 8 of prepared documents, the output of which is connected with the input of the unit 14 for downloading prepared documents by means of direct and feedback communication through the logging system 5 connected with the interactive service "personal account" 4, and its output is switched to the external user's computer device 1 through the communications node 2.

The automated system for preparing documents works as follows.

The user using a computer device 1, such as a personal computer, laptop, personal communicator, cell phone, mobile Internet device, payment terminal, ATM, touch information terminal, etc., as well as a network of several such devices, and communications node 2 goes to the desired search engine and finds through the visual display unit 3 the line of "personal account" 4, where it is necessary to register for identification. After that, the user information is entered into the logging system 5. Then the user enters login and password and gets online access to search for the necessary information, electronic databases of documents, system blocks responsible for modifying (correcting) template layouts according to the sample and preparing documents according to the selected templates, using the search system 6. To do this, the user enters into the search field of the search system 6 his query on the following attributes: subject, type of document, number of the standard form, date of document adoption, title of the document, text of the document, then the system starts searching in the internal databank 7 of document templates, as well as in the databank 8 of prepared documents.

If there is a requested document, the system finds the desired one and gives it to the user, after which the document found is checked for the relevance of the template with the help of the unit 11 for checking and adjusting document templates and the operator's computer device 12. After checking the document for relevance, the document is sent through the unit 11 for checking and adjusting document templates in the unit 13 for preparing documents, where the user fills it as per the form. If the required document was not found in the internal databank 7 of document templates, as well as in the databank 8 of prepared documents, the search system 6 refers via the communications node 9 to databases 10 of external sources, where the user is offered to select the necessary web official resource, such as Federal Tax Service, Federal Bailiff Service, etc. Then, the document found (selected) by the user is sent through the search system 6 to the unit 11 for checking and adjusting document templates, where the internal databank 7 of document templates is updated and replenished with the help of the operator's computer device 12. If several templates of the same document are found both in internal databases 7 of the system and in external information sources, such templates are compared in unit 11 for checking and adjusting document templates and, if differences are found, the template layout from internal databank 7 of document templates is corrected to the current version of the document. User actions to adjust documents and update internal information bases are controlled by the database operator's computer device 12.

The next step is the process of forming the document itself, where the user fills it out on the form in the unit 13 for preparing documents. To generate a document, one of the possible options is chosen: in the first case, the document is formed by substituting details and/or other data in the empty fields of the template, in the second case the document is generated on the multiple-choice template, including preliminary survey of the user by interdependent questions on the template. After the unit 11 for checking and adjusting document templates, the template found is sent to the unit 13 for preparing documents, where the user fills it as per the form. After the user completely fills in the found document and clicks the button confirming that the template is completely filled in, this document goes into the databank 8 of prepared documents. Next, the user receives a message about the readiness of the generated document and an invitation to download it. The document is downloaded from the unit 5 of the logging system through the unit 14 for downloading prepared documents, where it is transmitted through the communications node 9 to the external user's computer device 1.

Access to the document creation service delivery system can be provided through the use of software (SAAS application) pre-installed on the user's device or located on a separate storage medium.
Access to the document creation service delivery system in terms of actions with the same document (or template) can be provided whether a single user at a time, or several users simultaneously, and in the latter variant the granting (or limiting) different rights and opportunities when working with a specific document (template) or with documents (templates) of certain types or categories for different users or their groups may be provided.

## Claims

1. The automated system for preparing documents, **characterized in that** it consists of at least one external user's computer device, an external user's communications node, a visual display unit, an interactive service "personal account", a search system, an internal databank of document templates, a computer device of the operator of the document template databank, a unit for preparing documents, a databank of prepared documents, a logging system, a unit for downloading prepared documents, external databases and libraries, a communications node for external databases and libraries, a unit for checking and adjusting document templates, wherein the search system that searches for the required document template on request and exports it to the unit for checking and adjusting document templates, is configured to interface both with the internal databank of document templates, and the databases and digital libraries of external sources through the communications node on duplex information channels, and the unit for checking and adjusting document templates is configured to compare and adjust document templates to the current version of the document from various sources, including external, wherein one output of the unit for checking and adjusting document templates is switched with the internal databank of document templates through the computer device of the operator of the document template database by means of the direct and feedback communication, and the second output is switched with the unit for preparing documents, which provides document formation with the subsequent output to the databank of prepared documents, the output of which is connected with the input of the unit for downloading prepared documents by means of the direct and feedback communication through the logging system connected with the interactive service "personal account", and its output is switched to the external user's computer device through the communications node.
